# EUROPEAN PATENT APPLICATION

(11) **EP 1 404 128 A1**
(43) Date of publication of application: **31.03.2004**
(21) Application number: 02738824.8
(22) Date of filing: 27.06.2002
(51) Int. Cl.: H04N 5/91, H04N 5/92, H04N 5/93, G11B 20/10

(54) **CONTENT DATA TRANSMITTING DEVICE AND METHOD, AND CONTENT DATA PROCESSING DEVICE AND METHOD**

(30) Priority: 27.06.2001 JP 2001195466
(71) Applicant: Sony Corporation, Tokyo 141-0001 (JP)
(72) Inventor: HAMADA, Ichiro, Sony Corporation, Tokyo 141-0001 (JP); OMIKA, Kaori, Sony Corporation, Tokyo 141-0001 (JP)
(74) Representative: Turner, James Arthur
(86) International application number: PCT/JP2002/006500
(87) International publication number: WO 2003/003735

(57) **Abstract**

The invention relates to a content data transmission apparatus, content data processing apparatus and the like suitable for digital broadcast transmission apparatus, reception apparatus and the like. A move_pause descriptor is included in a PMT multiplexed in a transport stream TS. A CPU 101 controls move processing and pause processing on the content data based on the description of the move_pause descriptor. The move_pause descriptor contains such information as moveability of the content data, a number of times of allowable moves, pauseability of the content data, a number of times of allowable pauses, and a time limit of pausing. In the move, when copying of a stream TS stored in an HDD 106 is not prohibited, it can be moved to a storage device 240 without changing copy generation information of the content data. In the pause, when copying of the stream TS is prohibited, the stream TS is stored in the HDD 106 without being output to an output device (e.g. monitor 230), and subsequently retrieved therefrom to output it to the output device. The invention enables protection for copyright of the content provider when the content data is moved or paused.

## Description

### TECHNICAL FIELD

The invention relates to a content data transmission apparatus and a method for transmitting content data of, for example, video and audio transport streams and it also relates to a content data processing apparatus and a content data processing method for processing such content data.

Particularly, the invention relates to a content data transmission apparatus and the like for transmitting content data and additional information multiplexed in the content data, the additional information including at least move information that indicates whether move processing to move the content data from one storage device to another without changing the copy generation information of the content data is allowed or not when copying of the content data is not prohibited, whereby the invention is capable of limiting the move processing of the content data based on the move information to protect the copyright for the content provider when the content data is moved.

The invention also relates to an apparatus and the like for transmitting content data and pause information multiplexed in the content data, the pause information indicating whether pause processing of the content data is allowed or not, the pause processing including storing the content data in a storage device without outputting it to an output device and subsequently retrieve it from the storage device to an output device when copying of the content data is prohibited, whereby the invention is capable of limiting the pause processing on the content data based on the pause information to protect the copyright for the content provider when the content data is paused.

### BACKGROUND ART

Conventional digital broadcasting receivers have lacked a storage device such as a hard disc drive (hereinafter referred to as "HDD") for temporarily storing content data of, for example, video and audio transport streams. Consequently, in order to for a user to enjoy the content, the data must be archived or copied once in a storage medium to reproduce it later, unless he or she enjoys it in real time. Hence, a copyright to the content data has been technically protected by simply preventing the archived content data from being illegally copied.

However, use of storage devices like the HDD are now available for a user to temporarily store the content data and reproduce it later as he wishes. In other words, he or she can enjoy it at any later time, without archiving it, by time-shifting the utilization of the content data.

Time-shifting includes a "move" which is applicable to the content data of which the copy is not prohibited, and involves a transfer of content data from one storage device to another without changing the copy generation information of the content data, and a "pause" which is applicable to copy-prohibited content data, and involves temporary storage of the copy-prohibited content data in a storage device without outputting it to an output device and subsequent retrieval of the data from the storage device to the output device.

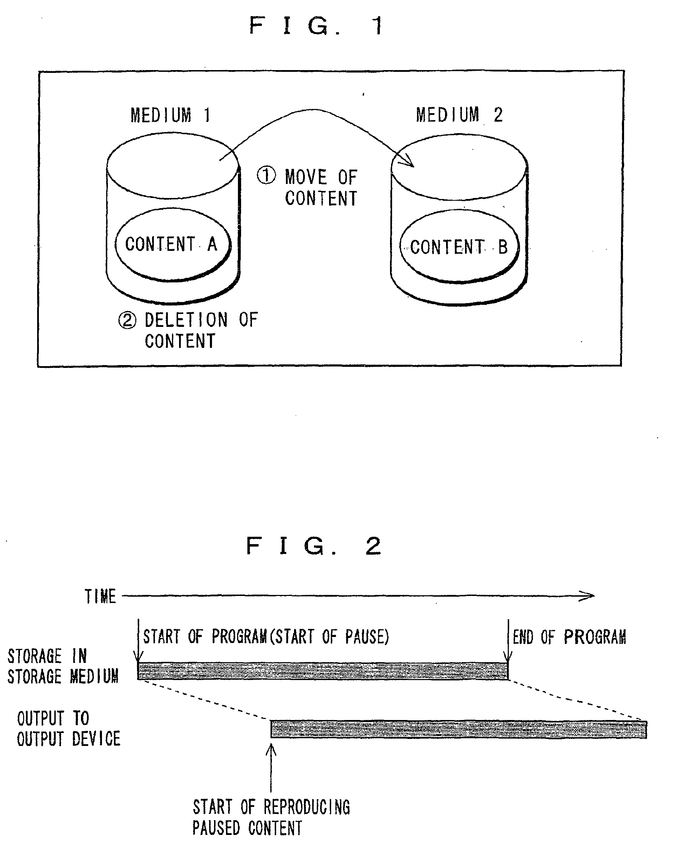

Fig. 1 schematically illustrates move processing. Thus, the content data is stored in a medium 1 (a storage device). Upon receipt of a request for a start of move, the content data is moved from the medium 1 to a medium 2. That is, the content data is retrieved from the medium 1 and stored in the medium 2 (another storage device). The content data is then deleted from the medium 1.

Fig. 2 schematically illustrates pause processing. Thus, the storage of content data (e.g. program data) in the storage medium is started upon receipt of a request for a start of pause. Subsequently, upon receipt of a reproduction request, the content data is retrieved from the storage medium and sent to an output device.

After being sent to the output device, the content data is immediately deleted from the storage medium. When, however, retrieval of the content data to the output device is allowed for a predetermined number of times, the number of retrieval made is counted and the content data is deleted only after the count exceeded the predetermined number.

Since the above described move and pause are new in concept, there is no known technology to protect copyrights when the content data is moved or paused. Therefore, there is a need for measures to limit the available range of the move and the pause of content data in accordance with the intention of a content provider.

### DISCLOSURE OF THE INVENTION

It is an object of the invention to allow for protecting a copyright for a content provider when the content data is moved or paused.

In accordance with one aspect of the invention, a content data transmission apparatus comprises data generation means for generating content data,
information generation means for generating additional information including at least move information indicating whether move processing to move the content data from one storage device to another without changing copy generation information of the content data is allowed or not when copying of the content data is not prohibited, and transmission means for transmitting content data with the content data generated by the data generation means being multiplexed with the additional information generated by the information generation means.

In accordance with another aspect of the invention, a method for transmitting content data comprises steps of generating content data, generating additional information including at least move information indicating whether move processing to move the content data from one storage device to another without changing the copy generation information of the content data is allowed or not when copying of the content data is not prohibited, and transmitting content data with the generated content data being multiplexed with the generated additional information.

In accordance with further aspect of the invention, a content data processing apparatus is provided for receiving and processing content data, the content data being multiplexed with additional information, the additional information including at least move information indicating whether or not move processing to move the content data from one storage device to anther without changing the copy generation information of the content data is allowed when copying of the content data is not prohibited. The content data processing apparatus comprises data reception means for receiving the content data, a storage device for storing the content data received by the data reception means, information separation means for separating the additional information from the content data received by the data reception means, instruction means for instructing a start of the move processing, and control means for allowing the content data stored in the storage device to be moved to another storage device without changing the copy generation information of the content data upon receipt of an instruction from the instruction means to start the move processing when copying of the content data stored in the storage device is not prohibited if the move information included in the additional information separated by the information separation means indicates that the move processing is allowable.

In accordance with still further aspect of the invention, a content data processing method for receiving and processing content data comprises steps of receiving content data, storing the received content data in a storage device,
separating from the received content data additional information including at least move information indicating whether move processing to move the content data from the storage device to another without changing the copy generation information of the content data is allowed or not when copying of the content data is not prohibited, and moving the content data stored in the storage device to another storage device without changing the copy generation information of the content data upon receipt of an instruction to start move processing when copying of the content data stored in the storage device is not prohibited if the move information included in the separated additional information indicates that the move processing is allowable.

According to the invention, when copying of the content data is not prohibited, the content data is multiplexed with additional information including at least move information indicating whether or not the move processing to move the data from one storage device to another is allowable, and the content data thus multiplexed is transmitted. When such multiplexed content data is received, the additional information can be separated from the content data.

Upon receipt of an instruction instructing a start of the move processing while the received content data is stored in one storage device, the content data stored in the storage device is moved to another storage device if copying of the content data is not prohibited and the move information contained in the separated additional information indicates that the move processing is allowable. That is, the content data is retrieved from that one storage device and transmitted to and stored in another storage device without changing the copy generation information of the content data. At the same time, the content data is deleted from that one storage device.

In this way, the move processing of content data can be limited by the move information multiplexed with the content data, to thereby protect the copyright for a content provider when the content data is moved.

It is noted that when the move information included in the additional information indicates that the move processing is allowable, the additional information may further include frequency information indicating a number of times that the move processing is permitted. In this case, if the number of times included in the frequency information does not indicate zero at the time the start of the move processing is instructed, the content data stored in that one storage device is moved to another, and the frequency information included in the additional information multiplexed with the content data is altered to decrease the number by 1. Thereby, the limitation of the allowable frequency of the move processing may be controlled in accordance with the intention of the content provider.

In accordance with still further aspect of the invention, a content data transmission apparatus comprises data generation means for generating content data, information generation means for generating additional information that includes at least pause information indicating whether or not pause processing is allowed, the pause processing including storing the content data in a storage device without outputting it to an output device and subsequently retrieve the content data from the storage device to the output device when copying of the content data is prohibited, and data transmission means for transmitting the content data with the content data generated by the data generation means being multiplexed with the additional information generated by the information generation means.

In accordance with still further aspect of the invention, a method of transmitting content data comprises steps of generating content data, generating additional information that includes at least pause information indicating whether or not pause processing is allowed, the pause processing including storing content data in a storage device without being output to an output device and subsequently output from the storage device to the output device when copying of the content data is prohibited, and transmitting content data with the generated content data being multiplexed with the generated additional information.

In accordance with further aspect of the invention, a content data processing apparatus is provided for receiving and processing content data, the content data being multiplexed with additional information, the additional information including at least pause information indicating whether or not pause processing is allowed, the pause processing allowing the content data to be stored in a storage device without being output to an output device and subsequently output to the output device when copying of the content data is prohibited. The content data processing apparatus comprises data reception means for receiving content data, information separation means for separating the additional information from the content data received by the data reception means, a storage device for storing the content data received by the data reception means, instruction means for giving instructions to start the pause processing and to start reproduction of the content data, and control means for allowing for starting storing the content data received by the data reception means into the storage device upon receipt of an instruction from the instruction means to start the pause processing when copying of the content data received by the data reception means is prohibited if the pause information included in the additional information separated by the information separation means indicates that the pause processing is allowable, and then allowing for outputting the content data stored in the storage device to the output device upon receipt of an instruction from the instruction means to start the reproduction thereof.

In accordance with still further aspect of the invention, a content data processing method for receiving and processing content data comprises steps of receiving content data, separating from the received content data additional information including at least pause information that indicates whether or not pause processing is allowed, the pause processing allowing the content data to be stored in a storage device without being output to an output device and subsequently output from the storage device to the output device when copying of the content data is prohibited, starting storing the received content data in the storage device upon receipt of an instruction to start the pause processing when copying of the content data is prohibited if the pause information included in the separated additional information indicates that the pause processing is allowable, and outputting the content data stored in the storage device to the output device upon receipt of an instruction to start reproduction of the content data.

According to the invention, the content data is multiplexed with additional information containing at least the pause information indicating whether or not the pause processing is allowed, the pause processing including, in the event that copying of the content data is prohibited, storing the content data in a storage device without being output to an output device and then outputting the content data from the storage device to the output device, and the multiplexed content data is transmitted. When such multiplexed content data is received, the additional information may be obtained by separating it from the multiplexed content data.

Storage of the received content data in the storage device is started upon receipt of an instruction to start the pause processing if, in the event that copying of said content data is prohibited, the pause information contained in the separated additional information indicates that the pause processing is allowable. When a reproduction of the data is subsequently instructed, the content data stored in the storage device is retrieved therefrom and output to an output device.

Thus, the pause processing of content data may be restricted by the pause information multiplexed in the content data, thereby protecting the copyright for the content provider when the content data is paused.

It is noted that if the pause information contained in the additional information indicates that the pause processing of the content data is allowable, the additional information may further contain frequency information indicating how many times (frequency) the content data stored in the storage device can be output to the output device. In this case, if the number of times included in the frequency information does not indicate zero at the time when a start of the pause processing is instructed, the content data stored in the storage device is output to the output device, and the frequency information is altered to decrease the number by 1. Thus, the number of outputting (the number of reproduction) may be restricted in accordance with the intention of the content provider.

When the pause information included in the additional information indicates that the pause processing is allowable, the additional information may further contain time-limit information describing a time limit that the content data can be stored in storage device so that the content data corresponding to the time limit indicated by the time-limit information may be deleted. As an example, such time-limit information is a maximum period of time that the content data can stay in a storage device. As another example, the time-limit information is the deadline that the content data can stay in the storage device. In this manner, a valid time limit for storing the content data can be limited in accordance with the intention of the content provider.

### BRIEF DESCRIPTION OF THE DRAWINGS

Fig. 1 is a diagram illustrating a concept of processing a move.
Fig. 2 is a diagram illustrating a concept of processing a pause.
Fig. 3 is a block diagram of a digital broadcast reception apparatus.
Fig. 4 is a block diagram of a transmission apparatus for transmitting a broadcast signal SB.
Fig. 5 is a diagram showing syntax of a program map table (PMT).
Fig. 6 is a diagram showing operational rules for the respective fields of the PMT syntax.
Fig. 7 is a diagram showing syntax of digital copy descriptor.
Fig. 8 is a diagram showing operational rules for the respective fields of the digital copy control descriptor.
Fig. 9 is a diagram showing syntax of move_pause descriptor.
Fig. 10 is a diagram showing operational rules for the respective fields of the move_pause descriptor.
Fig. 11 is a flow diagram illustrating a procedure of a move.
Figs. 12A and 12B together show a flow diagram of pause procedure.

### BEST MODE FOR CARRYING OUT THE INVENTION

Preferred embodiments of the invention will now be described below.

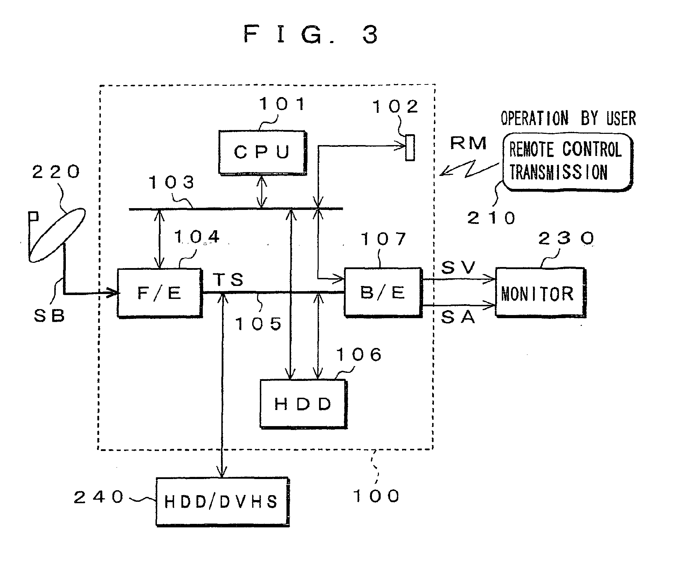

Fig. 3 shows a configuration of a digital broadcast reception apparatus 100. The reception apparatus 100 has a central processing unit (CPU) 101 that is a controller for controlling operations of the various sections of the reception apparatus and a remote control signal receiving section 102 for receiving a remote control signal RM from a remote control transmitter 210. A user can execute various operations on the reception apparatus 100 using the remote control transmitter 210. The CPU 101 and the remote control signal receiving section 102 are connected to a bus 103. The operational signal outputted from the remote control signal receiving section 102 in response to a received remote control signal RM is supplied to the CPU 101 via the bus 103.

The reception apparatus 100 has a front end section (F/E) 104 for downconverting and selecting a broadcast signal SB transmitted from a satellite (not shown) and received by an reception antenna 220 to obtain a transport stream TS as content data. The output of the front end section 104 is coupled to a bus 105.

The reception apparatus 100 also has a storage device in the form of, for example, a hard disc drive (HDD) 106 for temporarily storing the transport stream TS output from the front end section 104, and a back end section (B/E) 107 for separating desired video and audio packet data of the program from the transport stream TS output from the front end section 104 or the HDD 106 and for outputting an image signal SV and an audio signal SA of the relevant program. The HDD 106 and the back end section 107 are connected to the bus 105. The image signal SV and the audio signal SA output from the back end section 107 are supplied to an output device such as an external monitor 230.

The back end section 107 also separates additional information such as program specific information (PSI) multiplexed with the transport stream TS. The additional information is supplied to the CPU 101 via the bus 103. When the user has operated selection of a program, the CPU 101 controls the back end section 107 to separate the video and audio packet data based on the PSI contained in the additional information.

Also connected to the bus 105 is a storage device 240 as another storage device such as an HDD or a D-VHS video deck. The transport stream TS is transmitted from the front end section 104 to the HDD 106 and the storage device 240 using MPEG partial transport stream (hereinafter referred to as MPEG Partial TS). This MPEG partial TS is used as digital communication means for transmitting MPEG content data from a receiver to a digital storage device such as an HDD and a D-VHS video deck. Details of MPEG Partial TS are disclosed in "DVB ETS 300 468 Specification for Service Information (SI) in DVB Systems", ARIB-STD B1/B21, and ARIB TR-B15.

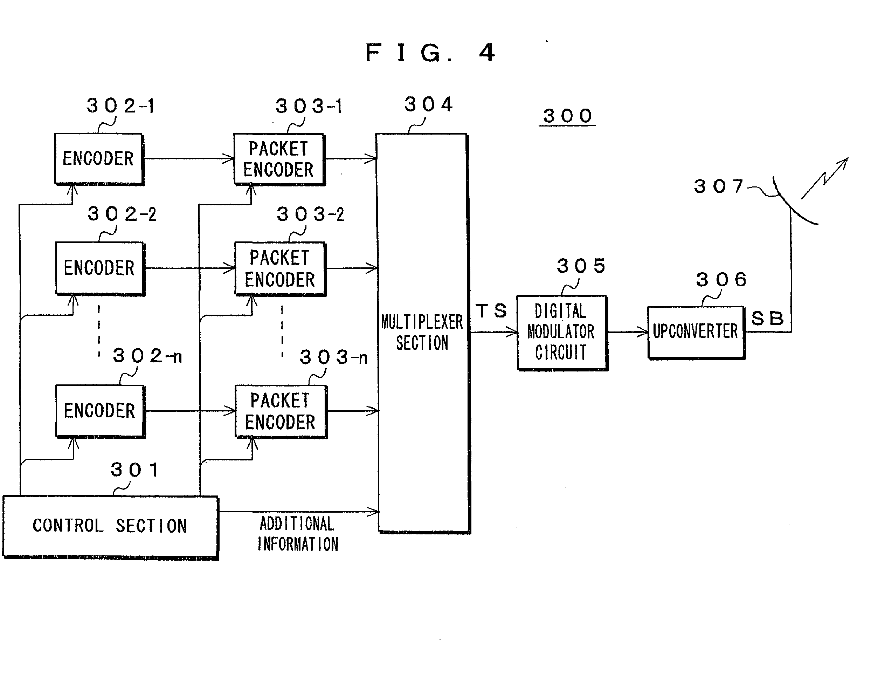

Broadcast signal SB received by the reception antenna 220 will now be described. This broadcast signal broadcast signal SB is generated by a transmission apparatus 300 as shown in Fig. 4.

The transmission apparatus 300 has a control section 301 for controlling overall operations of the transmission apparatus, encoders 302₋₁ - 302₋ₙ, and packet encoders 303₋₁ - 303₋ₙ.

The encoders 302₋₁ - 302₋ₙ respectively execute, for example, MPEG2 compression encoding on the video and audio signals constituting a television signal. The packet encoders 303₋₁ - 303₋ₙ then generate packetized elementary stream (PES) of packets from compressed video and audio data output from the respective encoders 302₋₁ - 302₋ₙ. The packet encoders 303₋₁ - 303₋ₙ further generate MPEG2 transport packets. As is well known in the art, payload section (data section) of the MPEG2 transport packet (not shown) includes further divisional PES packets.

The transmission apparatus 300 has a multiplexer section 304 for multiplexing the MPEG2 transport packets received from the packet encoders 303₋₁ - 303₋ₙ to generate a transport stream TS. Additional information including program specific information (PSI) generated by the control section 301 is also supplied to the multiplexer section 304 wherein this additional information is also multiplexed.

The PSI includes tables such as a program association table (PAT), a program map table (PMT), and a network information table (NIT), which are each disposed in the payload section of MPEG2 transport packet in accordance with their section forms.

The transmission apparatus 300 has a digital modulation circuit 305 for performing digital modulation on the transport stream TS obtained by the multiplexer section 304, an upconverter 306 for upconverting the output of the digital modulation circuit 305 to obtain a broadcast signal SB, and a transmission antenna 307 for transmitting the broadcast signal SB output from the upconverter 306 to the satellite.

Referring to Fig. 4, operations of the transmission apparatus 300 will be described. The video data and the audio data encoded by the encoders 302₋₁ - 302₋ₙ are supplied to the respective packet encoders 303₋₁ - 303₋ₙ for packetization. The MPEG2 transport packets output from the packet encoders 303₋₁ - 303₋ₙ and the additional information including PSI generated by the control section 301 are supplied to the multiplexer section 304 wherein they are multiplexed together to generate the transport stream TS.

The transport stream TS generated by the multiplexer section 304 is, after modulated by the digital modulation circuit 305, upconverted by the upconverter 306 and supplied to the transmission antenna 307 for transmission thereof to the satellite.

The transport stream TS, obtained in the front end section 104 of the reception apparatus 100 shown in Fig. 3, has a similar structure to that of the transport stream TS generated by the multiplexer section 304 of the transmission apparatus 3 00 shown in Fig. 4.

The PMT mentioned above will be further described in detail below.

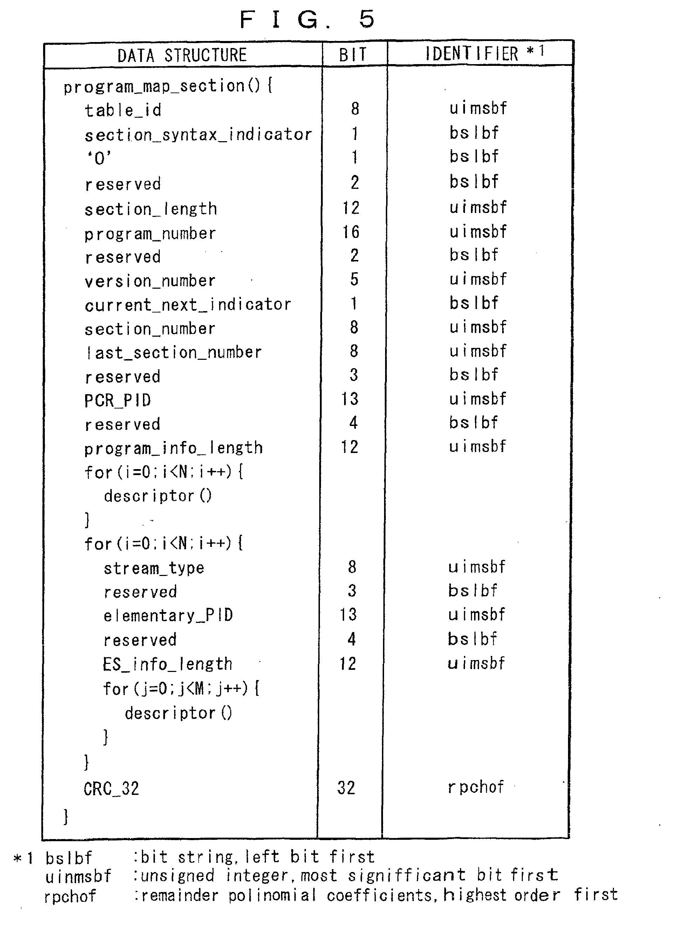

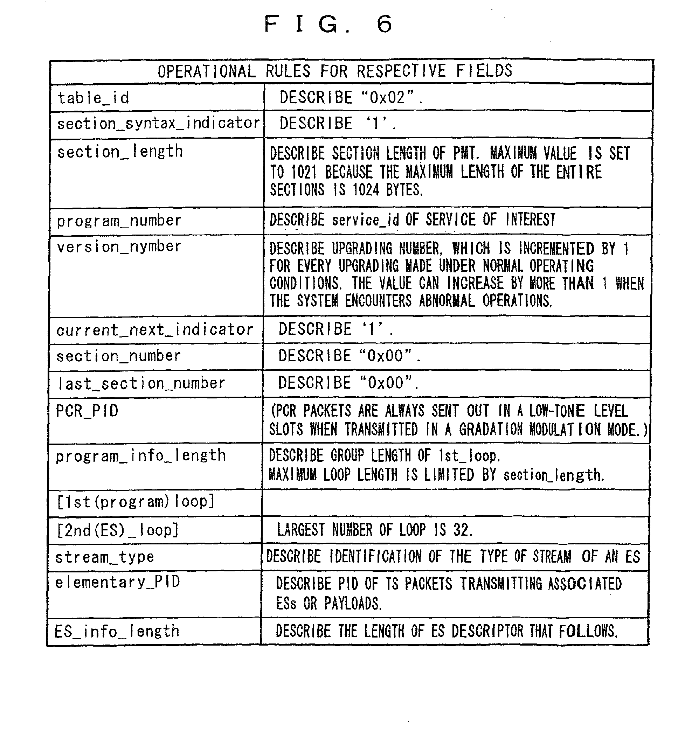

The PMT is a table describing a current elementary stream (ES) information of a given program number. Fig. 5 shows syntax of the PMT, and Fig. 6 shows the operational rules of the respective fields of the PMT syntax. Contents of major rules are as follows:
A field, "table_id" describes "0x02" to identify the PMT;
A field, "program_number" describes the service ID (service_id) of a current service; and
A field, "stream_type" describes the identification of the type (image, sound, additional data or the like) of the subject ES stream.

When copy control information is intended to be described for the whole service, a digital copy control descriptor is described in a field, "1st (program) loop" of the PMT. When copy control information is intended to be described for each ES in the service, a digital copy control descriptor is described in a field, "2nd (ES) loop" of the PMT.

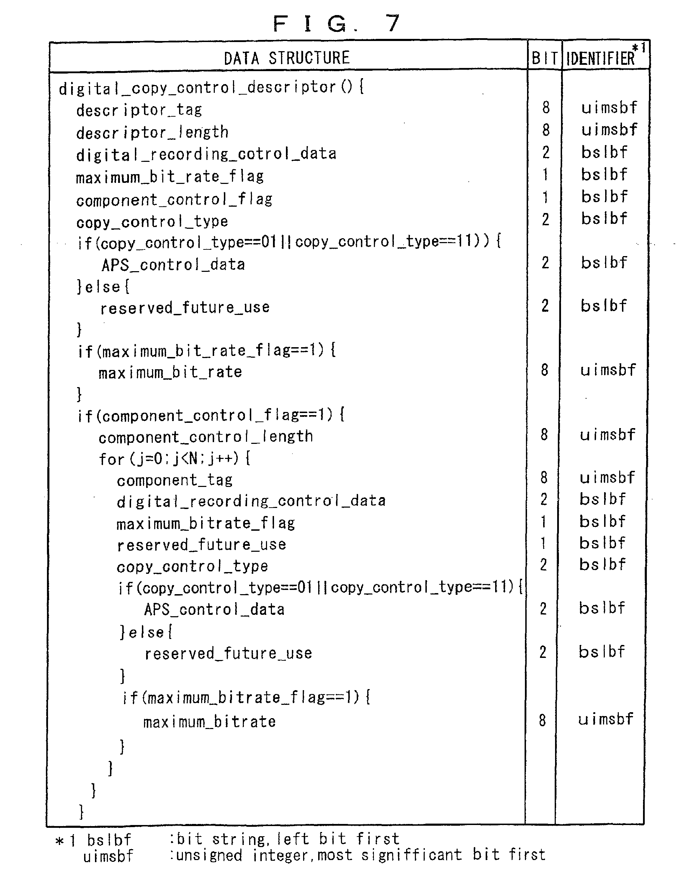

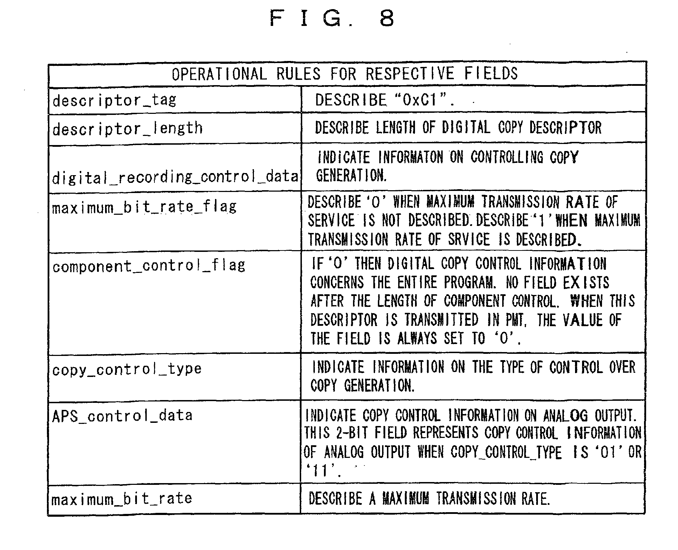

Fig. 7 shows syntax of the digital copy control descriptor, and Fig. 8 shows operational rules for the respective fields of the descriptor. Details of the major rules are as follows:
A field, "descriptor_tag" describes "0xC1" to identify that the descriptor is a digital copy control descriptor; and
A field, "digital_recording_control_data" describes copy generation information.

The copy generation information is represented by 2 bits of Copy Generation Management System (CGMS). For example, 00 stands for Copy Free, 10 for Copy Once, 11 for Never Copy, and 01 for Copy No More. Details of the digital copy control descriptor are disclosed in the ARIB TR-B15.

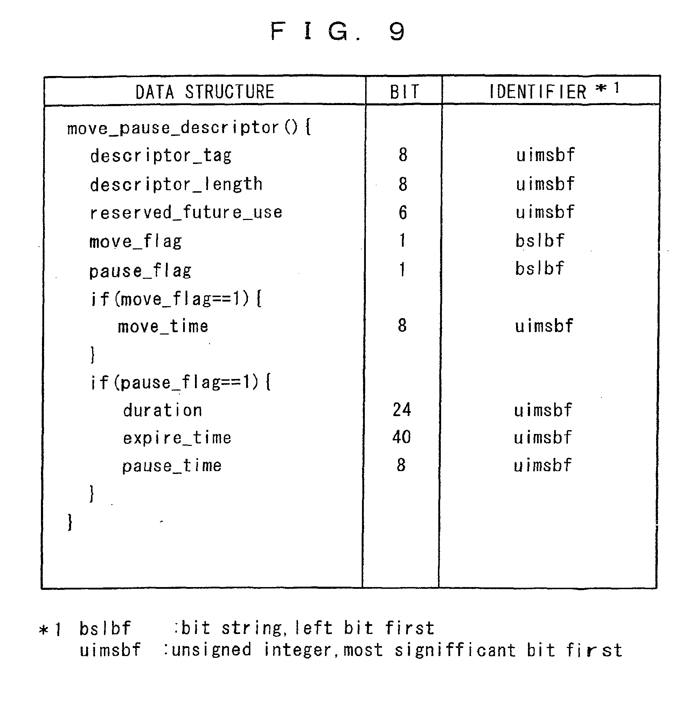

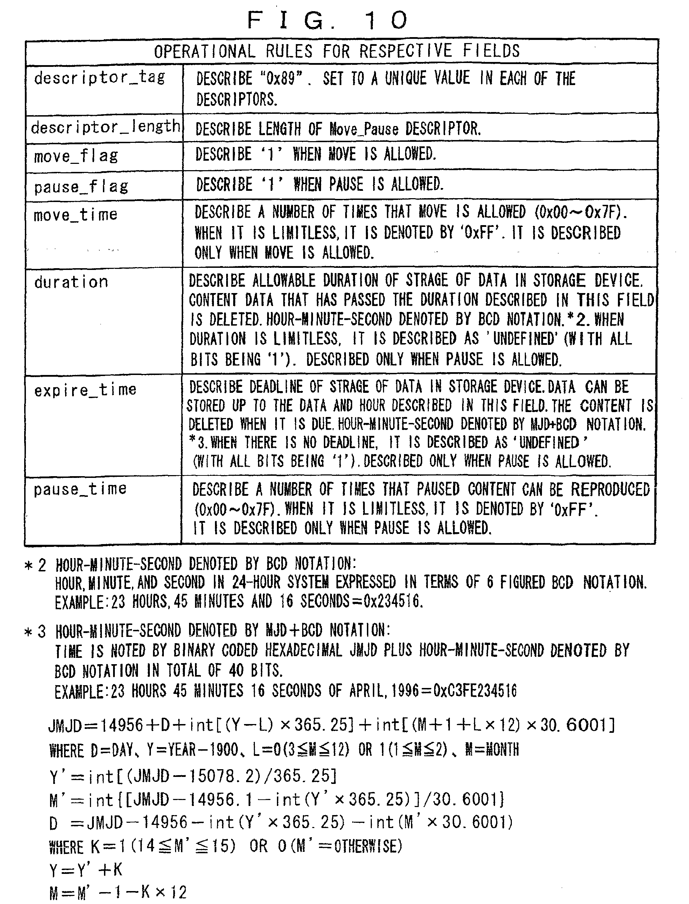

In the present embodiment, a new type of move_pause descriptor is provided as control information for controlling move and pause processing of content data. When a content provider wishes to place limitation on the move and/or pause of the content, he or she can do so by specifying the information in the move_pause descriptor. Fig. 9 shows syntax of the move_pause descriptor, and Fig. 10 shows operational rules of the respective fields of the move_pause descriptor. The above mentioned PMT can be used as a table describing the move_pause descriptor, like the digital copy control descriptor. If no move_pause descriptor is provided in the PMT, then no move or pause is allowed.

Major fields of the move_pause descriptor syntax will now be described below.

A field, "descriptor_tag" describes "0x89", for example, as an identification of the move_pause descriptor. A field, "move_flag" has "1" if the move is allowed. A field, "pause_flag" has "1" if a pause is allowed. A field, "move_time" describes a number of times (or frequency) (0x00∼0x7F) that move is allowed. If the frequency of move is not limited, the field describes "0xFF". This field, "move_time" is described only when move is allowed.

As to pause syntax, there are two ways in describing time-limit information that indicates how long content data can be stored in a storage device, which can be selected in accordance with the intention of the content provider.

One way is to specify a period of time (or duration) when the content data is allowed to stay in a storage device. A field, "duration" describes this allowable duration. The content data that has passed the duration will be deleted. The duration is given in terms of hour, minute, and second in a binary-coded decimal (BCD) notation. When there is no limit in the duration, it is regarded as "undefined" (with all the bits being 1). The field, "duration" is described only when the pause is allowed.

The other way is to specify the deadline (or "expire_time"), at which term of validity expires for the stored content data. A field, "expire_time" describes this deadline. At the time of expiration, the content data will be deleted. The field, "expire_time" is given in terms of hour, minute, and second in a modified Julian day (MJD) plus BCD notation. When no deadline is limited, it is denoted as "undefined" (with all the bits being 1). This field, "expire_time" is described only when the pause is allowed.

It is noted that the time limit cannot be simultaneously specified in both of the two fields (i.e. the "duration" and the "expire_time"). In order to leave one of them undefined, the time limit can be specified as "undefined" (with all the bits being 1s.) If both of the fields, "duration" and "expire_time" are specified, a receiver preferentially selects the field, "duration".

Irrespective of the type of time limit selected ("duration" or "expir_limit"), limitation of a frequency of allowable reproduction can be described. A field, "pause_time" describes a frequency of the allowable reproduction (0x00-0x7F). If there is no limitation on the frequency, it is denoted by "0xFF". The field, "pause_time" is described only when the pause is allowable.

Next, referring to Fig. 3, operations of the digital broadcast reception apparatus 100 will be described.

The broadcast signal SB transmitted from the satellite and received by the reception antenna 220 is supplied to the front end section (F/E) 104. The front end section (F/E) 104 downconverts the signal SB and selects a broadcast signal under the control of CPU 101 based on a user's operation via a remote control transmitter 210. As a result, the front end section 104 outputs a transport stream TS associated with the selected broadcast signal as the content data.

The transport stream TS output from the front end section 104 is supplied to the back end section (B/E) 107. In the back end section (B/E) 107, under the control of the CPU 101, video and audio MPEG2 transport packets associated with the selected program are separated from the transport stream TS based on the selection operation of a program made by the user via the remote control transmitter 210. The packets are also decoded to provide the video signal SV and the audio signal SA. These video signal SV and audio signal SA are supplied to the monitor 230, which displays the video signal SV and outputs a sound for the audio signal SA.

In the back end section 107, additional information including program specification information multiplexed in the transport stream TS is also separated. The additional information is supplied to the CPU 101 via the bus 103. When the user has requested for a program-specific operation, the CPU 101 controls the back end section 107 to separate the video and audio packet data therefrom based on the program specification information contained in the additional information.

The CPU 101 executes move processing or pause processing based on the description of the digital copy control descriptor and the move_pause descriptor described in the PMT, which is a part of program specification information.

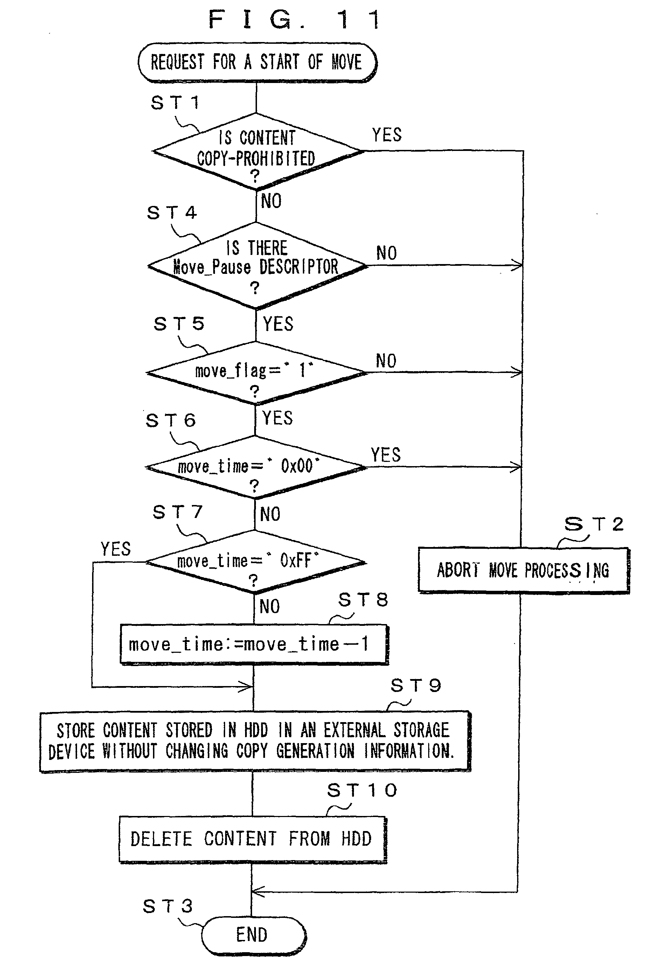

Referring now to a flow diagram shown in Fig. 11, the move processing will be described.

If a request for starting the move is made by operations of the user via the remote control transmitter 210 to move the transport stream TS to an external storage device 240 after the transport stream TS has been output from the front end section 104 and stored in the HDD 106, then it is determined in step ST1 whether copying of the content data is prohibited or not based on the digital copy control descriptor regarding the transport stream TS. If copying is prohibited, then the move processing is aborted in step ST2, and the procedure is ended in step ST3.

If copying is not prohibited in step ST1, then it is determined in step ST4 whether or not there is the move_pause descriptor for the transport stream TS. If no move_pause descriptor exists, then the move processing is aborted in step ST2, and then the procedure is ended in step ST3. On the other hand, if the move_pause descriptor exists, then the procedure proceeds to step ST5.

In step ST5, it is determined if the move is allowed (move_flag = "1") or not. If the move is not allowed, then the move processing is aborted in step ST2, and the procedure is ended in step ST3. On the other hand, if the move is allowed, then it is determined in step ST6 whether the number of moves allowed indicates zero (move_time = "0x00") or not. If the number indicates zero, the move processing is aborted in step ST2 since a further move is not possible. The procedure is ended in step ST3. If, on the other hand, the number does not indicate zero, the procedure proceeds to step ST7.

In step ST7, it is determined if the number is limitless ("move_time = "0xFF") or not. If the number is not limitless, then the field, "move_time" of the move_pause descriptor in the PMT multiplexed with the transport stream TS stored in the HDD 106 is altered to decrease the number of allowable move by 1. The procedure then proceeds to step ST9. On the other hand, if the number is limitless, then the procedure directly proceeds to step ST9.

In step ST9, the transport stream TS stored in the HDD 106 is retrieved so that it is transferred to the storage device 240 and stored therein. In this case, the description of the field, "digital_recording_control_data" of the digital copy control descriptor in the PMT multiplexed with the transport stream TS is left as it is, and copy generation information thereof remains unchanged.

Subsequently in step ST10, the transport stream TS associated with the move processing is deleted from the HDD 106. This completes the move processing to move the transport stream TS from the HDD 106 to the external storage device 240, and the procedure is ended in step ST3.

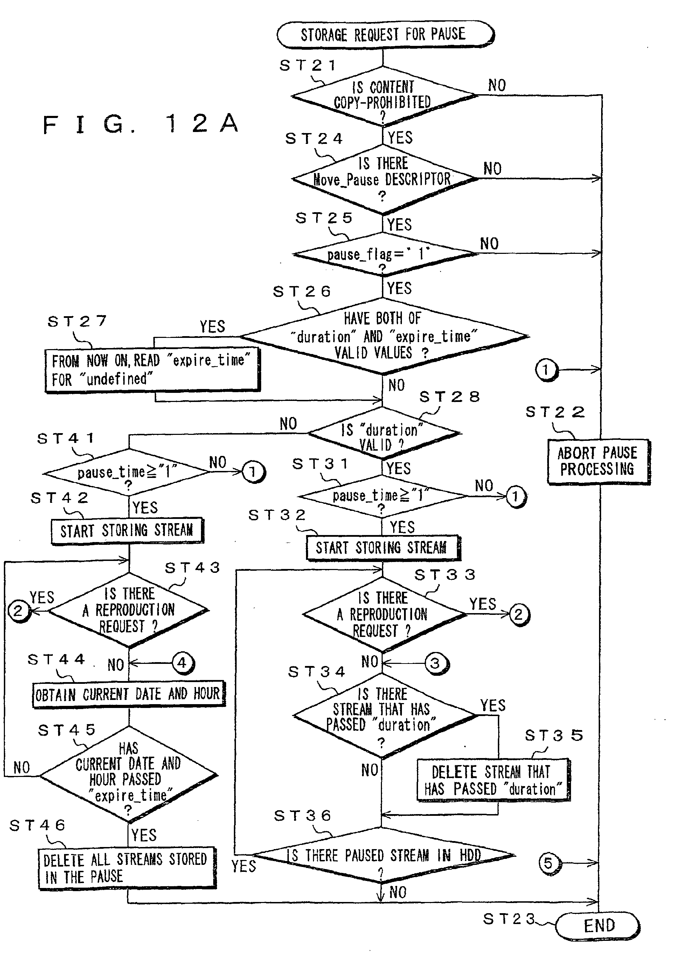

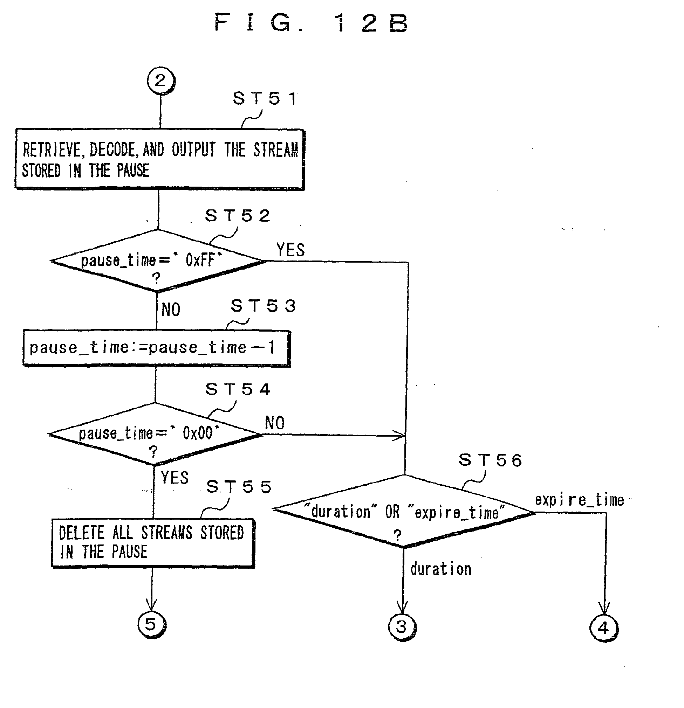

Referring next to the flow diagram shown in Figs. 12A and 12B, the pause processing will be described.

When a storage request for the pause is made by operations of the user via the remote control transmitter, it is determined in step ST21 whether or not the transport stream TS output from the front end section 104 is copy-prohibited content data according to the digital copy control descriptor associated with the transport stream TS. If it is not copy-prohibited one, the pause processing is aborted in step ST22, and the procedure is ended in step ST23.

If it is found in step ST21 that the transport stream TS is copy-prohibited one, then it is determined in step ST24 whether or not there is a move_pause descriptor associated with the transport stream TS. If no move_pause descriptor exists, then the pause processing is aborted in step ST22, and the procedure is ended in step ST23. On the other hand, if a move_pause descriptor exists, the procedure proceeds to step ST25.

In step ST25, it is determined whether a pause is allowed (pause_flag = "1") or not. If no pause is allowed, the pause processing is aborted in step ST22, and the procedure is ended in step ST23. If a pause is allowed, the procedure proceeds to step ST 26.

In step ST26, it is determined whether or not both of fields, "duration" and "expire_time" of the move_pause descriptor have valid values. If the both fields have valid values, the field, "expire_time" is altered to "undefined" (with all the bits being 1) in Step 27, and then the procedure proceeds to step ST28. On the other hand, if the both fields have not valid values simultaneously, the procedure directly proceeds to step ST28.

In step ST 28, it is determined whether the field, "duration" has a valid value or not. If the field, "duration" has a valid value, it is determined in step ST31 whether or not the reproduction allowable number is at least one (pause_time = "0x01" or greater). If the reproduction allowable number indicates zero, the pause processing is aborted in step ST22 and the procedure is ended in step ST23 since there is no point in storing the transport stream TS in the HDD 106. On the other hand, if the reproduction allowable number indicates at least one, the procedure starts storing in the HDD 106 the transport stream TS output from the front end section 104. Storage of the transport stream TS is continued until the completion of the program associated with the transport stream TS.

Next, it is determined in step ST33 whether or not a reproduction request is made by operations of the user via the remote control transmitter. If no reproduction request is made, it is determined in step ST34 whether or not a transport stream TS exists in the HDD 106 that has passed the allowable storage time (duration). From time information received from a built-in clock circuit, the CPU 101 can obtain time that has elapsed since the beginning of storing the content data. If there is any transport stream TS that has passed the allowable storage duration, the transport stream TS is deleted from the HDD 106 in step ST35, and then the procedure proceeds to step ST36. On the other hand, if no transport stream TS has passed the allowable storage duration, the procedure directly proceeds to step ST36.

In step ST36, it is determined whether or not there remains any transport stream TS that has been stored in the HDD 106 in accordance with the storage request for the pause. If no transport stream TS remains, then the procedure proceeds to step ST23 to end the processing since the reproduction is not possible any longer. On the other hand, if any transport stream TS remains, the procedure proceeds back to Step 33 wherein it is determined whether or not a reproduction request is again made since the reproduction may be still made.

If, in step ST28, the field, "duration" has an invalid value but the field, "expire_time" has a valid value, it is determined in step ST41 whether or not the number of times that reproduction is allowed ("pause_time") is equal to or greater than one ("pause_time" = "0x01 or greater). If the reproduction allowable number indicates zero, then the pause processing is aborted in step ST22, and the procedure is ended in step ST23 since there is no point to store the transport stream TS in the HDD 106. On the other hand, in Step 42, if the reproduction allowable number indicates 1 or greater, the procedure starts storing the transport stream TS output from the front end section 104. Storage of the transport stream TS is continued until the completion of the program associated with the transport stream TS.

Next, it is determined in step ST43 whether or not a reproduction request is made by operations of the user via the remote control transmitter. If no request is made, the current date and hour are obtained in step ST44. The date and hour can be obtained from the clock circuit provided in the CPU 101. The procedure proceeds to step ST45 where it is determined whether or not the date and hour has passed the deadline or expiration time ("expire_time"). If the current date and hour has passed the expiration time, all the transport streams stored in the HDD 106 in response to the storage request for the pause are deleted in step ST46, and then the pause processing is ended in step ST23. On the other hand, if the current date and hour has not passed the expiration time, the procedure proceeds back to Step 43 wherein it is again determined whether a reproduction request is made since the reproduction may be still made.

If it is found in either of steps ST33 or ST43 that a reproduction request is made, the transport stream TS that has been stored in the HDD 106 in response to the storage request for the pause is sequentially retrieved, decoded, and output in step ST51 (see Fig. 12B). The transport stream TS thus retrieved from the HDD 106 is supplied to the back end section 107.

In the back end section 107, the video and audio MPEG2 transport packets associated with the program selected by the operations of the user via the remote control transmitter 210 are separated from the transport stream TS retrieved from the HDD 106 and decoded under the control of the CPU 101, thereby providing requested video signal SV and audio signal SA. These video signal SV and audio signal SA are supplied to the monitor 230 displaying images based on the video signal SV and outputting sounds based on the audio signal SA.

Subsequently, it is determined in step ST52 whether the reproduction allowable number is limitless (pause_time = "0xFF") or not. If the reproduction allowable number is not limitless, the number is decreased by 1 in Step 53 and the procedure proceeds to step ST54. In Step 54, it is determined whether the reproduction allowable number indicates zero (pause_time = "0x00") or not. If the reproduction allowable number indicates zero, all the transport streams ST stored in the HDD 106 in response to the storage request for the pause is deleted in Step 55 since the reproduction is not allowed any longer. Then, the procedure proceeds to step ST23 to end the pause processing.

On the other hand, if it is found in step ST54 that the reproduction allowable number does not indicate zero, then the procedure proceeds to step ST56. The procedure may also proceed to step ST56 if the reproduction allowable number is found to be limitless in step ST52. In step ST56, it is determined which of the fields, "duration" and "expire_time" have valid values. When the field, "duration" has a valid value, the procedure returns to step ST34 and assumes a stand-by mode waiting for a reproduction request generated if the field, "duration" has a valid value. On the other hand, when the field, "expire_time" has a valid value, the procedure returns to step ST44 and assumes a stand-by mode waiting for a reproduction request generated if the field, "expire_time" has a valid value.

In this manner, in accordance with the embodiments of the invention, the digital copy control descriptor and the move_pause descriptor are described in the PMT multiplexed with the transport stream TS obtained by the front end section 104 from the broadcast signal SB transmitted from the transmission apparatus 300. The CPU 101 controls the move processing and the pause processing based on the digital copy control descriptor and the move_pause descriptor. Thus, according to the embodiments of invention, this can adequately protect the copyright for a content provider when the content data is moved or paused.

In the embodiments shown herein above, the move_pause descriptor includes the field, "move_time" describing a number of moves to be allowed, and if the move processing is made, description of the field, "move_time" is altered to decrease the number by 1. Therefore, according to the embodiment, a frequency of the move processing to be allowed can be limited as intended by the content provider.

In the embodiments shown herein, the move_pause descriptor includes the field, "pause_time" describing a number of times of reproduction (or output) to be allowed for the pause. If the reproduction is made, description of the field, "pause_time" is altered to decrease the number of times by 1. Therefore, according to the embodiments, the number of times of reproduction (or output) can be limited as intended by the content provider.

In the embodiments shown herein, the move_pause descriptor includes the fields, "duration" and "expire_time" each describing a time limit of storing a transport stream TS in the HDD 106 when the pause processing is allowed. Transport stream TS corresponding to the time limit indicated by the time limitation information is deleted from the HDD 106. Therefore, the time limit of the content data can be restricted as intended by the content provider.

It should be understood that although the move_pause descriptor that can describe the move information and the pause information has been described in the PMT according to the embodiments above, the move_pause descriptor might be described in any other tables. Alternatively, the move_pause descriptor may be replaced by a move descriptor (i.e. syntax containing only move information) or by a pause descriptor (i.e. syntax containing only pause information). In this case, move is not allowed if no move descriptor is included, and pause is not allowed if no pause descriptor is included.

It is possible to omit the description of the fields, "move_time" indicating move allowable times and "pause_time" indicating reproduction allowable times for the pause, respectively, to fix the times of the move or the pause for any practical use. This can be done by allowing move and pause either once or without any limit. Further, the syntax of the time limitation of storage for the pause may include the field, "duration" or the field, "expire_time" only, according to the needs. Alternatively, even both of the fields, "duration" and "expire_time" can be omitted by setting up a fixed operational time limit (e.g. a fixed duration of only 60 minutes for the pause) or a fixed deadline, for any practical use.

In the embodiments shown herein, the invention has been described with reference to a preferred digital broadcast transmission apparatus and a reception apparatus. However, it will be apparent to a person skill in the art that the invention may be applied equally well to other types of transmission apparatuses and reception apparatuses for content data.

According to the invention, the additional information including at least move information indicating whether the move processing to move the content data from one storage device to another is allowed or not when copying of the content data is not prohibited, is multiplexed with the content data, and the additional information thus multiplexed is transmitted, thereby limiting the move processing on the content data based on the move information multiplexed with the content data to protect the copyright for the content provider when the content data is moved.

Further, according to the invention, the pause information indicating whether the pause processing to store the content data in a storage device without outputting it to an output device and subsequently output the content data from the storage device to the output device when copying of the content data is prohibited is allowed or not, is multiplexed with the content data and the pause information thus multiplexed is transmitted, thereby limiting the pause processing on the content data based on the pause information multiplexed with the content data to protect the copyright for the content provider when the content data is paused.

### INDUSTRIAL APPLICABILITY

As described above, a content data transmission apparatus, a method for transmitting content data, a content data processing apparatus and a content data processing method in accordance with the invention are suited for use not only as a digital broadcast transmission apparatus and a digital broadcast reception apparatus but also as any other content data receiving and transmitting apparatus.

## Claims

1. A content data transmission apparatus comprising:
data generation means for generating content data;
information generation means for generating additional information including at least move information indicating whether move processing to move said content data from one storage device to another without changing the copy generation information of said content data is allowed or not when copying of said content data is not prohibited; and
transmission means for transmitting content data with said content data generated by the data generation means being multiplexed with said additional information generated by said information generation means.

2. The content data transmission apparatus according to claim 1, wherein, when said move information included in said additional information generated by said information generation means indicates that said move processing is allowable, said additional information further includes frequency information describing a number of times that said move processing is allowable.

3. A content data transmission apparatus, comprising:
data generation means for generating content data;
information generation means for generating additional information that includes at least pause information indicating whether or not pause processing is allowed, said pause processing including storing the content data in a storage device without outputting the content data to an output device and subsequently retrieve the content data from the storage device to said output device when copying of the content data is prohibited; and
data transmission means for transmitting content data with said content data generated by the data generation means being multiplexed with said additional information generated by said information generation means.

4. The content data transmission apparatus according to claim 3, wherein, when said pause information included in said additional information generated by said information generation means indicates that said pause processing is allowable, said additional information generated by said information generation means further includes frequency information describing a number of times that said content data stored in said storage device is allowed to be output to said output device.

5. The content data transmission apparatus according to claim 3, wherein, when said pause information included in said additional information generated by said information generation means indicates that said pause processing is allowable, said additional information further includes time-limit information describing a time limit that said content data is allowed to be stored in said storage device.

6. The content data transmission apparatus according to claim 5, wherein said time-limit information includes a period of time when said content data is allowed to be stored in said storage device.

7. The content data transmission apparatus according to claim 5, wherein said time-limit information includes a dead line that said content data is allowed to be stored in said storage device.

8. A method for transmitting content data, comprising steps of:
generating content data;
generating additional information including at least move information indicating whether move processing to move said content data from one storage device to another without changing the copy generation information of said content data is allowed or not when copying of said content data is not prohibited; and
transmitting content data with said generated content data being multiplexed with said generated additional information.

9. A method for transmitting content data, comprising steps of;
generating content data;
generating additional information that includes at least pause information indicating whether or not pause processing is allowed, said pause processing including storing said content data in a storage device without being output to an output device and subsequently output from the storage device to an output device when copying of the content data is prohibited; and
transmitting content data with said generated content data being multiplexed with said generated additional information.

10. A content data processing apparatus for receiving and processing content data, said content data being multiplexed with additional information, said additional information including at least move information indicating whether or not move processing to move said content data from one storage device to another without changing the copy generation information of said content data is allowed when copying of said content data is not prohibited, said apparatus comprising:
data reception means for receiving said content data;
a storage device for storing said content data received by said data reception means;
information separation means for separating said additional information from said content data received by said data reception means;
instruction means for instructing a start of said move processing; and
control means for allowing said content data stored in said storage device to be moved to another storage device without changing the copy generation information of the content data upon receipt of an instruction from said instruction means to start the move processing when copying of the content data stored in said storage device is not prohibited if the move information included in the additional information separated by the information separation means indicates that the move processing is allowable.

11. The content data processing apparatus according to claim 10,
wherein said additional information further includes frequency information describing a number of times that said move processing is allowable when said move information contained in said additional information indicates that said move processing is allowable; and
wherein said control means allows for moving said content data stored in said storage device to said another storage device upon receipt of an instruction to start said move processing if said number described in said frequency information does not indicate zero, and altering said frequency information included in the additional information multiplexed with said content data to decrease said number by 1.

12. A content data processing apparatus for receiving and processing content data, said content data being multiplexed with additional information, said additional information including at least pause information indicating whether or not pause processing is allowed, said pause processing allowing the content data to be stored in a storage device without being output to an output device and subsequently output to said output device when copying of said content data is prohibited, said content data processing apparatus comprising:
data reception means for receiving content data;
information separation means for separating said additional information from said content data received by the data reception means;
a storage device for storing said content data received by said reception means;
instruction means for giving instructions to start said pause processing and to start reproduction of said content data; and
control means for allowing for starting storing the content data received by said data reception means into said storage device upon receipt of an instruction from said instruction means to start the pause processing when copying of the content data received by said data reception means is prohibited if said pause information included in the additional information separated by said information separation means indicates that said pause processing is allowable, and then allowing for outputting the content data stored in said storage device to the output device upon receipt of an instruction from said instruction means to start a reproduction thereof.

13. The content data processing apparatus according to claim 12,
wherein said additional information further includes frequency information describing a number of times that said content data stored in said storage device is allowed to be output to said output device when said pause information contained in said additional information indicates that said pause processing is allowable; and
wherein said control means allows for outputting said content data stored in said storage device to said output device upon receipt of an instruction to start reproducing said content data when said number included in said frequency information does not indicate zero, and decreasing said number included in said frequency information by 1.

14. The content data processing apparatus according to claim 13, wherein said control means allows for deleting said content data stored in said storage device when said number included in said frequency information has become zero.

15. The content data processing apparatus according to claim 12,
wherein said additional information further includes time-limit information describing a time limit that said content data is allowed to be stored in said storage device when said pause information contained in said additional information indicates that said pause processing is allowable; and
wherein said control means allows for deleting from said storage device said content data corresponding to the time limit indicated in said time-limit information.

16. The content data processing apparatus according to claim 15, wherein said time-limit information represents a period of time when said content data is allowed to be stored in said storage device.

17. The content data processing apparatus according to claim 15, wherein said time-limit information represents a deadline that said content data is allowed to be stored in said storage device.

18. A content data processing method for receiving and processing content data, comprising steps of:
receiving content data;
storing said received content data in a storage device;
separating from said received content data additional information including at least move information indicating whether move processing to move said content data from said storage device to another without changing the copy generation information of said content data is allowed or not when copying of the content data is not prohibited; and
moving said content data stored in said storage device to another storage device without changing the copy generation information of said content data upon receipt of an instruction to start move processing when copying of said content data is not prohibited if said move information included in said separated additional information indicates that said move processing is allowable.

19. A content data processing method for receiving and processing content data, comprising steps of:
receiving content data;
separating from said received content data additional information including at least pause information that indicates whether or not pause processing is allowed, said pause processing allowing the content data to be stored in a storage device without being output to an output device and subsequently output from the storage device to said output device when copying of the content data is prohibited;
starting storing said received content data in said storage device upon receipt of an instruction to start the pause processing when copying of said content data is prohibited if the pause information included in the separated additional information indicates that said pause processing is allowable; and
outputting said content data stored in said storage device to the output device upon receipt of an instruction to start reproduction of said content data.
